# EUROPÄISCHE PATENTSCHRIFT

(11) **EP 4 332 527 B1**
(45) Veröffentlichungstag und Bekanntmachung des Hinweises auf die Patenterteilung: **11.11.2026**
(21) Anmeldenummer: 23215969.9
(22) Anmeldetag: 23.12.2020
(51) Int. Cl.: G01K 1/14, G01K 13/02

(54) **VORRICHTUNG MIT EINEM AUFNAHMERAUM FÜR EINE FLÜSSIGKEIT**
DEVICE WITH A RECEIVING SPACE FOR A LIQUID
DISPOSITIF COMPRENANT UN COMPARTIMENT POUR CONTENIR UN LIQUIDE

(30) Priorität: 27.12.2019 AT 511572019
(43) Veröffentlichungstag der Anmeldung: 06.03.2024
(62) Dokumentnummer(n) der früheren Anmeldung(en) nach Art. 76 EPÜ: 20216777.1 / 3 842 774
(73) Patentinhaber: Austria Email AG, 8720 Knittelfeld (AT)
(72) Erfinder: STOCKER, Frank, 8740 Zeltweg (AT)
(74) Vertreter: SONN Patentanwälte GmbH & Co KG

(56) Entgegenhaltungen:
- EP-B2- 2 233 858
- DE-U1- 29 606 702
- DE-U1- 29 820 671
- US-A1- 2010 319 378

## Beschreibung

Die Erfindung betrifft eine Vorrichtung mit einem Aufnahmeraum für eine Flüssigkeit und einer in dem Aufnahmeraum befindlichen Temperaturmesseinrichtung, welche ein Tauchrohr mit mehreren Temperaturfühlern aufweist, wobei in das Innere des Tauchrohrs eine Haltevorrichtung für die Temperaturfühler eingefügt ist, welche Haltevorrichtung zumindest ein längliches Grundkörpersegment mit zumindest einer Haltelängsnut aufweist, wobei die Temperaturfühler in die zumindest eine Haltelängsnut des zumindest einen Grundkörpersegments aufgenommen sind, wobei jeweils ein Temperaturfühlerkopf der Temperaturfühler zumindest teilweise aus der Haltelängsnut des Grundkörpersegments hervorragt.

Tauchrohre mit darin befindlichen Temperaturfühlern werden dazu eingesetzt, die Temperatur einer Flüssigkeit, zum Beispiel im Aufnahmeraum eines Warmwasserspeichers, zu messen. Um einen Temperaturfühler innerhalb eines Tauchrohres zu fixieren und die Temperatur der Flüssigkeit möglichst unverfälscht an den Temperaturfühler weiterzuleiten, sind aus dem Stand der Technik verschiedene Methoden und Vorrichtungen bekannt.

Beispielsweise offenbart die DE 20 2007 017 515 U1 eine Fixiervorrichtung mit einem federnden Blech zur Befestigung mindestens eines Temperaturfühlers in einem Tauchrohr. Die Fixiervorrichtung weist die Form eines Sternes auf, wobei in den Vertiefungen zwischen den vorstehenden Zacken jeweils ein Temperaturfühler aufgenommen werden kann. Durch die federnde Wirkung des Bleches werden die Temperaturfühler gegen die Innenwandung des Tauchrohres gedrückt.

Des Weiteren ist aus der DE 297 06 390 U1 bekannt, Temperaturfühler mit unterschiedlichen Dicken mittels unterschiedlich weit vorspringenden Federelementen gegen die Innenwandung einer Tauchhülse zu drücken.

Aus DE 1 648 217 A1, DE 1 473 158 und DE 86 31 832 U1 sind weitere Haltevorrichtungen mit Nuten bekannt. In die Haltevorrichtungen der DE 1 648 217 A1 und der DE 1 473 158 sind Thermoelemente ohne Fühlerköpfe vollständig in Nuten eingefügt.

Aus DE 298 20 671 U1 ist ein Halter für wenigstens einen in ein Aufnahmerohr eines Erwärmungsgerätes einzubringenden Fühlerkopf eines Temperaturreglers bekannt.

DE 296 06 702 U1 zeigt ein Schutzrohr zur Messung mindestens einer Temperatur, wobei im Inneren des Schutzrohres ein oder mehrere Temperaturfühler angeordnet sind, die mittels Ankopplungsfedern gegen eine Innenwand des Schutzrohres gedrückt werden.

Warmwasserspeicher sind aus EP 2 233 858 B2 und US 2010/0319378 A1 bekannt.

Nachteiligerweise kann es beim Stand der Technik passieren, dass die Temperaturfühler bei Krafteinwirkungen, beispielsweise Erschütterungen oder während Montagearbeiten, von ihrer ursprünglichen Position im Tauchrohr verschoben werden. Somit wird in weiterer Folge die Temperatur der umgebenden Flüssigkeit nicht mehr an der eigentlich vorgesehenen Stelle gemessen. Des Weiteren ist beim Stand der Technik das Einfügen der Temperaturfühler in die Tauchrohre relativ kompliziert und mitunter fehleranfällig. Dies erschwert das Tauschen von defekten Temperaturfühlern und führt zu erhöhten Aufwand und Kosten bei der Montage. Zudem ist beim Stand der Technik das exakte Platzieren der Temperaturfühler innerhalb des Tauchrohres schwierig oder gar nicht möglich, was jedoch gerade bei messtechnischen Anwendungen, bei denen es wichtig ist, die Temperatur an einer bestimmten Stelle zu messen, von essentieller Bedeutung ist.

Es ist daher Aufgabe der vorliegenden Erfindung, die Nachteile des Standes der Technik zu lindern bzw. gänzlich zu beseitigen. Insbesondere ist es Aufgabe der vorliegenden Erfindung, eine Haltevorrichtung zu schaffen, die ein präzises und dauerhaftes Platzieren der Temperaturfühler innerhalb eines Tauchrohres ermöglicht und gleichzeitig eine vereinfachte und rasche Montage erlaubt.

Gelöst wird diese Aufgabe durch eine Vorrichtung mit den Merkmalen des Anspruchs 1. Erfindungsgemäß ist vorgesehen, dass die Temperaturmesseinrichtung dazu eingerichtet ist, die Temperatur der Flüssigkeit in verschiedenen Höhen im Aufnahmeraum zu bestimmen, wobei das Tauchrohr zur Messung der Temperatur der Flüssigkeit in verschiedenen Höhen vertikal in dem Aufnahmeraum angeordnet ist, oder dass das Tauchrohr horizontal in dem Aufnahmeraum angeordnet ist, um Temperaturen der Flüssigkeit an verschiedenen Stellen einer Ebene zu bestimmen. Vorteilhafterweise kann zur Montage der Temperaturfühler zuerst in die Haltelängsnut eingefügt und anschließend das Grundkörpersegment zusammen mit dem Temperaturfühler in das Tauchrohr eingeschoben werden, wodurch das Einführen und Positionieren der Temperaturfühler auf einfache Weise erfolgen kann. Nachfolgend wird zum Zwecke der Einfachheit teilweise Bezug auf einen einzigen Temperaturfühler genommen. Es sei jedoch festgehalten, dass sich die Erfindung gemäß Anspruch 1 auf eine Vorrichtung mit mehreren Temperaturfühlern bezieht. Zur Fixierung des Temperaturfühlers in der Haltelängsnut kann vorgesehen sein, dass der Temperaturfühler reibschlüssig und/oder formschlüssig in die Haltelängsnut aufgenommen ist. Somit wird die Position des Temperaturfühlers in der Haltelängsnut beim Einfügen im Wesentlichen beibehalten, wodurch die Lage des Temperaturfühlers durch Positionieren des Grundkörpersegments im Tauchrohr genau vorgegeben werden kann. Zusätzlich oder alternativ kann der Temperaturfühler in die Haltelängsnut auch eingeklebt oder andersartig befestigt sein. Das Grundkörpersegment kann - bis auf die Haltelängsnut - im Wesentlichen zylinderförmig ausgebildet sein. Es wäre aber auch denkbar, dass das Grundkörpersegment eine andere Form, beispielsweise eine Quaderform, aufweist. Die Form des Grundkörpersegments hängt primär von der Form des Tauchrohres ab, in welches das Grundkörpersegment eingeführt werden soll. Das Grundkörpersegment kann als Vollteil, d.h. ohne innere Hohlräume, ausgebildet sein. Erfindungsgemäß ist das Grundkörpersegment länglich geformt, was bedeutet, dass das Grundkörpersegment entlang jener Achse, entlang welcher das Grundkörpersegment bei der Montage in das Tauchrohr eingeführt wird, die größte Ausdehnung aufweist. Diese Achse wird auch als die Längsachse des Grundkörpersegments bezeichnet. Bevorzugt ist das Grundkörpersegment aus Kunststoff gefertigt. Bevorzugt werden Materialien mit einer niedrigen Wärmekapazität und einer niedrigen Wärmeleitfähigkeit verwendet. Bevorzugt liegt die Wärmekapazität des Materials des Grundkörpersegments im Bereich von 1 kJ/kg K. Die Haltevorrichtung kann grundsätzlich aus einem einzelnen Grundkörpersegment oder aus mehreren insbesondere gleichartigen Grundkörpersegmenten bestehen. Die Haltelängsnut besitzt an der Außenseite des Grundkörpersegments eine Öffnung und ist somit nach außen hin, das heißt von der Längsachse weg, offen, sodass ein Temperaturfühler von dieser Seite in die Haltelängsnut eingefügt werden kann. Der Querschnitt der Haltelängsnut kann verschiedene Formen, beispielsweise eine runde oder eine n-eckige aufweisen. Vorzugsweise ist jedoch vorgesehen, dass die Haltelängsnut zumindest teilweise rund, insbesondere teilweise kreisförmig, ist. Der Querschnitt der Haltelängsnut kann entlang ihrer gesamten Länge gleich sein. Vorzugsweise ist vorgesehen, dass die Haltelängsnut gerade (d.h. frei von Biegungen) ist und im Wesentlichen parallel zur Längsachse des Grundsegments verläuft. Es wäre jedoch auch denkbar, dass die Haltelängsnut schräg bzw. windschief zur Längsachse verläuft oder helixförmig um die Längsachse gewunden ist. Um mehrere Temperaturfühler in einem Tauchrohr zu befestigen, kann vorgesehen sein, dass das Grundkörpersegment mehrere gleichartige Haltelängsnuten aufweist. Somit kann bei dieser Ausführungsform in jede einzelne Haltelängsnut ein Temperaturfühler eingefügt sein. Die Haltelängsnuten können im Querschnitt des Grundkörpersegments betrachtet insbesondere regelmäßig beabstandet zueinander entlang des Außenumfanges des Grundkörpersegments angeordnet sein. Wenn mehrere Grundkörpersegmente vorgesehen sind, können diese miteinander verbunden werden, beispielsweise durch Verkleben. Der Durchmesser des Grundsegments beträgt vorzugsweise weniger als 200 mm, noch mehr bevorzugt weniger als 150 mm, weniger als 100 mm, weniger als 50 mm, weniger als 30 mm oder weniger als 20 mm.

In einer bevorzugten Ausführungsform ist vorgesehen, dass sich die Haltelängsnut von einem unteren Ende des Grundkörpersegments bis zu einem oberen Ende des Grundkörpersegments erstreckt. Vorteilhafterweise kann dadurch der Temperaturfühler an einer beliebigen Position entlang des Grundkörpersegments in der Haltelängsnut platziert werden. Die Deckflächen an den Stirnseiten des Grundkörpersegments am oberen und am unteren Ende können bei dieser Ausführungsform jeweils Öffnungen der Haltelängsnut aufweisen.

Üblicherweise weisen Temperaturfühler Kabel zur Weiterleitung von Datensignalen auf. Auch diese Kabel sollen an einer bestimmten Stelle in der Haltevorrichtung verlaufen. Aus diesem Grund ist bei einer Ausführungsform vorgesehen, dass das Grundkörpersegment zumindest eine, insbesondere zumindest zwei oder drei, vorzugsweise im Wesentlichen parallel zur Haltelängsnut verlaufende weitere Haltelängsnut/en aufweist, wobei die weitere/n Haltelängsnut/en vorzugsweise eine von der Querschnittsform der Haltelängsnut verschiedene Querschnittsform und/oder einen vom Durchmesser der Haltelängsnut verschiedenen Durchmesser aufweist/en. Die weitere Haltelängsnut kann beispielsweise dazu vorgesehen sein, Kabeln von Temperaturfühlern anderer Grundkörpersegmente aufzunehmen. Die weitere Haltelängsnut kann den gleichen Querschnitt wie die Haltelängsnut aufweisen. In diesem Fall kann auch ein Temperaturfühler in die weitere Haltelängsnut eingefügt werden. Bevorzugt ist jedoch vorgesehen, dass die weitere Haltelängsnut einen von der Haltelängsnut verschiedenen Querschnitt aufweist. Auch die weitere Haltelängsnut verläuft vorzugsweise vom unteren Ende des Grundkörpersegments bis zum oberen Ende des Grundkörpersegments. Im Querschnitt des Grundkörpersegments betrachtet können die Haltelängsnut/en und die weiteren Haltelängsnuten insbesondere regelmäßig beabstandet zueinander entlang des Außenumfangs des Grundkörpersegments angeordnet sein. Für den Fall, dass die Haltevorrichtung mehrere Grundkörpersegmente aufweist, kann bei dieser Ausführungsform das Kabel eines in der Haltelängsnut eines ersten Grundkörpersegments eingefügten Temperaturfühlers zunächst in der Haltelängsnut des ersten Grundkörpersegments verlaufen und anschließend in einer weiteren Haltelängsnut (oder alternativ auch in einer Haltelängsnut) eines anderen Grundkörpersegments weitergeführt werden. Da die Kabel von Temperaturfühlern in der Regel einen kleineren Querschnitt als die Temperaturfühler selbst aufweisen, ist bevorzugt vorgesehen, dass die weitere/n Haltelängsnut/en vorzugsweise einen von der Haltelängsnut verschiedenen, insbesondere kleineren, Querschnitt und/oder Durchmesser aufweist/en. Der Querschnitt der weiteren Haltelängsnuten kann an den Querschnitt der Kabel angepasst sein.

Um einen Temperaturfühler auf einfache Weise an einer beliebigen Stelle in das Grundkörpersegment einzuführen bzw. wieder entnehmen zu können, ist es vorteilhaft, wenn die Öffnungen der Haltelängsnut an der Außenseite des Grundkörpersegments angeordnet ist. Die Öffnung der Haltelängsnut weist demnach, von der Längsachse des Grundkörpersegments betrachtet, radial nach außen. Auch die Öffnung der weiteren Haltelängsnut kann an der Außenseite des Grundkörpersegments angeordnet sein.

Um mehrere Temperaturfühler an unterschiedlichen Stellen in einem Tauchrohr anzuordnen, ist es günstig, wenn zumindest zwei vorzugsweise gleichartige Grundkörpersegmente vorgesehen sind, die derart entlang einer gedachten Geraden zueinander angeordnet sind, dass die Längsnuten insbesondere fluchtend ineinander übergehen. Unter "Längsnuten" sind in diesem Zusammenhang sowohl Haltelängsnuten als auch weitere Haltelängsnuten zu verstehen. Die Grundkörpersegmente können mit ihren Stirnseiten unmittelbar aneinandergefügt sein. Es können allerdings auch Zwischenelemente oder ein Spiel zwischen den Grundkörpersegmenten vorgesehen sein. Besonders bevorzugt ist bei dieser Ausführungsform, wenn die Haltelängsnut eines Grundkörpersegments fluchtend zu einer weiteren Haltelängsnut mit einem vorzugsweise verringerten Querschnitt eines weiteren Grundkörpersegments angeordnet ist. "Fluchtend" bedeutet in diesem Zusammenhang, dass die Längsnuten im Wesentlichen ohne Verdrehung zueinander angeordnet sind. Wenn die Längsnuten gerade (ungebogen) ausgebildet sind, bedeutet "fluchtend", dass die Längsnuten entlang einer gedachten Geraden angeordnet sind. In einer bevorzugten Ausführungsform kann ein Temperaturfühler in die Haltelängsnut des einen Grundkörpersegments eingefügt sein und dessen Kabel zunächst in der Haltelängsnut und anschließend in der weiteren Haltelängsnut oder in der Haltelängsnut des anderen Grundkörpersegments verlaufen. Durch diese Anordnungsform ist eine stabile Verbindung der einzelnen Grundkörpersegmente gewährleistet. Die Grundkörpersegmente können auch unterschiedliche Längen aufweisen.

In einer besonders bevorzugten Ausführungsform ist vorgesehen, dass der Rand des Querschnitts der Haltelängsnut zumindest abschnittsweise im Wesentlichen rund, vorzugsweise im Wesentlichen zumindest halbkreisförmig, ausgebildet ist. Weiters kann vorgesehen sein, dass auch der Rand des Querschnitts der Haltelängsnut zumindest abschnittsweise im Wesentlichen rund, vorzugsweise im Wesentlichen zumindest halbkreisförmig, ausgebildet ist. Die zumindest abschnittsweise im Wesentlichen runde Form der Haltelängsnuten bzw. weiteren Haltelängsnuten ist deshalb von Vorteil, weil Temperaturfühler bzw. deren Kabel üblicherweise ebenfalls rund geformt sind. "Zumindest halbkreisförmig" bedeutet in diesem Zusammenhang, dass auch Formen, die näher an der vollständig geschlossenen Kreisform liegen, also zum Beispiel ein Dreiviertelkreis, vorgesehen sein können. Eine Viertelkreisform fällt jedoch nicht unter den Ausdruck "zumindest halbkreisförmig". Bevorzugt entspricht die Querschnittsform der Haltelängsnut und/oder der weiteren Haltelängsnut einem Kreissektor, wobei der Kreisbogen des Kreissektors zumindest 180°, noch mehr bevorzugt zumindest 200°, aufweist. Vorzugsweise ist der Querschnitt der Haltelängsnut und/oder der weiteren Haltelängsnut entlang ihrer gesamten Länge im Wesentlichen gleich.

Um einen Temperaturfühler in der Haltelängsnut zu fixieren, ist es günstig, wenn die Haltelängsnut zumindest eine Klemmnase zur formschlüssigen und/oder reibschlüssigen Aufnahme eines der Temperaturfühler in die Haltelängsnut aufweist. Es kann dabei vorgesehen sein, dass der Temperaturfühler in die Haltelängsnut eingeklippst wird. Zum Einfügen bzw. Einklippsen des Temperaturfühlers in die Haltelängsnut kann durch Aufwenden von Kraft die Klemmnase kurzzeitig elastisch verformt werden. Vorzugsweise bildet die Haltelängsnut die Klemmnase selbst aus. Insbesondere ist es günstig, wenn die Klemmnase durch einen die Öffnung der Haltelängsnut begrenzenden Längsrand der Haltelängsnut gebildet wird. Auch die weitere Haltelängsnut kann zumindest eine solche Klemmnase aufweisen. Durch die Klemmnase wird der Temperaturfühler in der Haltelängsnut gehalten, insbesondere eingekeilt.

Um eine beliebige Position des Temperaturfühlers vorzugeben, die zwischen dem oberen und unteren Ende des Segmentes liegt, ist es vorteilhaft, wenn in der Haltelängsnut zur Positionierung eines der Temperaturfühler ein Positionierelement vorgesehen ist. Das Positionierelement kann ebenfalls vorzugsweise formschlüssig und/oder reibschlüssig in die Haltelängsnut eingefügt sein.

Erfindungsgemäß ist vorgesehen, dass in die Haltelängsnut vorzugsweise formschlüssig und/oder reibschlüssig zumindest ein Temperaturfühler aufgenommen ist. Bevorzugt ist der Temperaturfühlerkopf des Temperaturfühlers benachbart zum unteren oder oberen Ende des Grundkörpersegments angeordnet. Insbesondere kann eine Stirnseite des Temperaturfühlerkopfs bündig mit einer der Stirnseiten des Grundkörpersegments abschließen.

Um die Temperatur der Flüssigkeit möglichst unverfälscht an den Temperaturfühler weiterzugeben, ist es vorteilhaft, dass der Temperaturfühler, insbesondere ein Temperaturfühlerkopf, zumindest teilweise aus der Haltelängsnut des Grundkörpersegments hervorragt. Dadurch kann der Temperaturfühler, insbesondere der Temperaturfühlerkopf, in einem in das Tauchrohr eingefügten Zustand in Kontakt mit der Innenwanderung des Tauchrohrs treten und dadurch die Temperatur der Flüssigkeit besonders exakt messen. Der Temperaturfühler(-kopf) kann dabei in reibschlüssigen Kontakt mit dem Tauchrohr treten. Der Temperaturfühlerkopf ist jener Teil des Temperaturfühlers, der den eigentlichen Temperatursensor, üblicherweise in einem Gehäuseteil, beinhaltet. Gemäß einer bevorzugten Ausführungsform kann vorgesehen sein, dass die Querschnittsform der Haltelängsnut zumindest teilweise der Querschnittsform eines der Temperaturfühler entspricht, wobei ein Durchmesser der Haltelängsnut vorzugsweise im Wesentlichen einem Durchmesser eines der Temperaturfühler entspricht.

Wie eingangs erwähnt, werden Tauchrohre mit darin befindlichen Temperaturfühlern zur Messung von Temperaturen in Flüssigkeiten eingesetzt. Die Erfindung betrifft daher auch ein Tauchrohr mit zumindest einem Temperaturfühler, wobei der Temperaturfühler in einer Haltelängsnut einer in das Tauchrohr eingefügten Haltevorrichtung gemäß den obigen Ausführungen angeordnet ist. Hinsichtlich der Vorteile der Haltevorrichtung wird auf die obigen Ausführungen verwiesen. Es können dabei eines oder mehrere Grundkörpersegmente innerhalb des Tauchrohres angeordnet sein. In ein Grundkörpersegment können wiederum ein oder mehrere Temperaturfühler eingefügt sein. Das bzw. die Grundkörpersegmente können durch Form- und/oder Reibschluss im Tauchrohr fixiert werden oder lose eingeschoben sein. Das Tauchrohr kann einen Anschlussteil, insbesondere einen Anschlussflansch, aufweisen. Das bzw. die Kabeln der Temperaturfühler können entlang der Haltevorrichtung bis zum Anschlussflansch geführt werden.

Bei vielen Anwendungen muss die Temperatur einer Flüssigkeit an verschiedenen Stellen gemessen werden. In einer besonders bevorzugten Ausführungsform ist daher vorgesehen, dass in das Innere des Tauchrohrs eine Haltevorrichtungen gemäß den obigen Ausführungen mit zumindest zwei Grundkörpersegmenten eingefügt ist, wobei die Grundkörpersegmente in die Längsrichtung des Tauchrohres betrachtet hintereinander eingefügt sind, wobei in die Haltelängsnuten der Grundkörpersegmente jeweils ein Temperaturfühler aufgenommen ist.

Wenn mehrere Grundkörpersegmente innerhalb eines Tauchrohres angeordnet sind, kann es vorteilhaft sein, wenn die Grundkörpersegmente jeweils zumindest eine weitere Haltelängsnut aufweisen, wobei die Grundkörpersegmente derart zueinander angeordnet sind, dass eine Haltelängsnut eines Grundkörpersegments an eine weitere Haltelängsnut mit einem vorzugsweise gegenüber der Haltelängsnut verkleinerten Querschnitt eines anderen Grundkörpersegments insbesondere fluchtend anschließt. Wie bereits oben beschrieben, ist dies insbesondere für die Verkabelung von Temperaturfühlern von Vorteil. Das Kabel eines Temperaturfühlers kann somit zunächst entlang der Haltelängsnut jenes Grundkörpersegments, in welches der Temperaturfühler eingefügt ist, über die weitere Haltelängsnut des anderen Grundkörpersegments bis hin zu einem Anschlussteil, beispielsweise einem Anschlussflansch, geführt werden.

Gemäß einer bevorzugten Ausführungsform ist daher vorgesehen, dass ein Kabel des Temperaturfühlers eines Grundkörpersegments in der Haltelängsnut des betreffenden Grundkörpersegments und in der weiteren Haltelängsnut eines anderen Grundkörpersegments verläuft. Wenn mehr als zwei Grundkörpersegmente vorgesehen sind, kann natürlich vorgesehen sein, dass das Kabel auch in den weiteren Haltelängsnuten von weiteren Grundkörpersegmenten verläuft. Durch diese Anordnungsform ist eine stabile Verbindung der einzelnen Grundkörpersegmente gewährleistet.

Gemäß einer bevorzugten Ausführungsform ist vorgesehen, dass die Anzahl an Längsnuten eines, insbesondere jeden, Grundkörpersegments der Anzahl an Temperaturfühlern in dem Tauchrohr entspricht. Unter "Längsnuten" sind in diesem Zusammenhang wiederum sowohl Haltelängsnuten als auch weitere Haltelängsnuten zu verstehen.

Um die Temperaturfühler bzw. die Grundkörpersegmente innerhalb des Tauchrohres zu befestigen bzw. zu fixieren, kann die Haltevorrichtungen durch Reibschluss mit einer Innenwandung des Tauchrohrs gehalten werden. Zusätzlich oder alternativ kann auch vorgesehen sein, dass die Temperaturfühler, insbesondere deren Temperaturfühlerköpfe, zumindest teilweise aus den Haltelängsnuten herausragen und im eingefügten Zustand der Haltevorrichtung mit der Innenwandung des Tauchrohrs in reibschlüssigen Kontakt treten.

Tauchrohre der beschriebenen Art werden oftmals in Vorrichtungen verwendet, welche einen Aufnahmeraum aufweisen, der zumindest teilweise mit Flüssigkeit gefüllt ist. Als Beispiel für eine solche Vorrichtung seien Warmwasserspeicher genannt. Aus diesem Grund betrifft die Erfindung auch eine Vorrichtung mit einem Aufnahmeraum, der mit einer Flüssigkeit füllbar ist. Um die Temperatur der im Aufnahmeraum befindlichen Flüssigkeit zu bestimmen, besitzt die Vorrichtungen üblicherweise eine Temperaturmesseinrichtung. Die Temperaturmesseinrichtung kann ein Tauchrohr der oben beschriebenen Art aufweisen. In einer Ausführungsform ist vorgesehen, dass die Temperatur einer eingefüllten Flüssigkeit im Aufnahmeraum in verschiedenen Höhen gemessen wird. Zu diesem Zweck ist das Tauchrohr vertikal in dem Aufnahmeraum angeordnet. Alternativ kann jedoch auch vorgesehen sein, dass das Tauchrohr horizontal in dem Aufnahmeraum angeordnet ist, um Temperaturen der Flüssigkeit an verschiedenen Stellen einer Ebene zu bestimmen.

Im Folgenden wird die Erfindung anhand von Figuren näher erläutert, auf die sie allerdings nicht beschränkt sein soll.
- Fig. 1: zeigt eine erfindungsgemäße Haltevorrichtung mit einem Grundkörpersegment;
- Fig. 2: zeigt eine Ansicht auf das obere Ende des Grundkörpersegments gemäß Fig. 1;
- Fig. 3: zeigt eine Ansicht auf das obere Ende des Grundkörpersegments gemäß einer zweiten Ausführungsform;
- Fig. 4: zeigt eine Haltevorrichtung mit zwei Grundkörpersegmenten;
- Fig. 5A: zeigt schematisch ein in ein Tauchrohr eingefügtes Grundkörpersegment mit Blick auf das obere Ende des Grundkörpersegments;
- Fig. 5B: zeigt eine Detailansicht zur Visualisierung des reibschlüssigen Kontaktes zwischen Fühler bzw. Fühlerkopf und der Innenwand des Tauchrohres;
- Fig. 6: zeigt eine teilweise aufgeschnittene, schematische Darstellung eines Tauchrohres mit mehreren Grundkörpersegmenten;
- Fig. 7: zeigt eine weitere teilweise aufgeschnittene, schematische Darstellung eines Tauchrohres mit mehreren Grundkörpersegmenten;
- Fig. 8: zeigt eine weitere teilweise aufgeschnittene, schematische Darstellung eines Tauchrohres mit mehreren Grundkörpersegmenten;
- Fig. 9A: zeigt eine weitere teilweise aufgeschnittene, schematische Darstellung eines Tauchrohres mit einem Grundkörpersegment;
- Fig. 9B: zeigt eine weitere teilweise aufgeschnittene, schematische Darstellung eines Tauchrohres mit einem Grundkörpersegment; und
- Fig. 10A und Fig. 10B: zeigen jeweils einen Warmwasserspeicher mit einem darin angeordneten Tauchrohr.

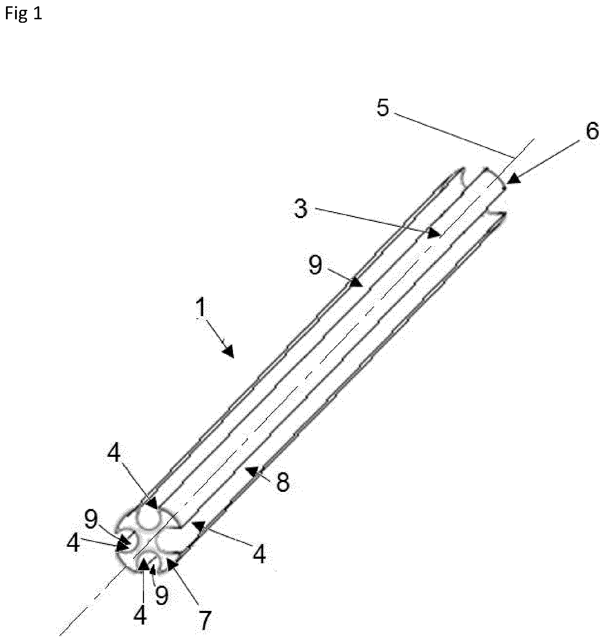

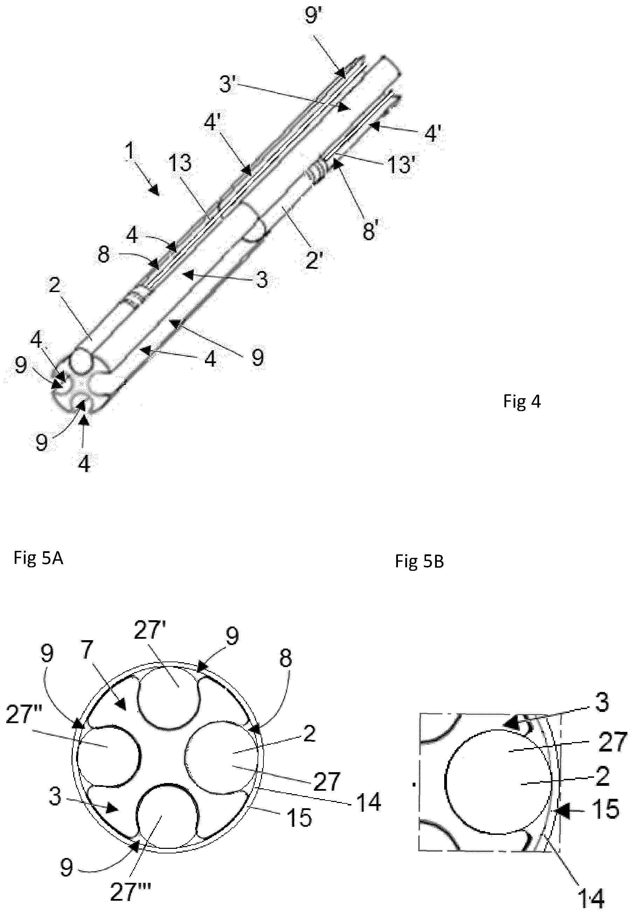

Fig. 1 zeigt eine Haltevorrichtung 1 zur Aufnahme zumindest eines Temperaturfühlers 2 (nicht dargestellt, siehe Fig. 5 bis 9). Die dargestellte Haltevorrichtung besteht aus einem länglichen Grundkörpersegment 3, welches in ein Tauchrohr 15 (siehe ebenfalls Fig. 5 bis 9) eingeführt werden kann. Das Grundkörpersegment 3 besitzt in der dargestellten Ausführungsform insgesamt vier im Wesentlichen gerade, d.h. ungebogene, Längsnuten 4, welche parallel zur Längsachse 5 des Grundkörpersegments 3 von einem unteren Ende 6 zu einem oberen Ende 7 des Grundkörpersegments 3 verlaufen. In der gezeigten Ausführungsform ist eine der vier Längsnuten 4 als Haltelängsnut 8 ausgebildet, welche einen Temperaturfühler 2 aufnehmen kann. Die übrigen drei Längsnuten 4 werden als weitere Haltelängsnuten 9 bezeichnet und sind dazu eingerichtet, Kabeln von Temperaturfühlern 2 weiterer Grundkörpersegmente aufzunehmen. Vorzugsweise werden Temperaturfühler 2, insbesondere die Temperaturfühlerköpfe 27, benachbart zum unteren 6 oder oberen Ende 7 des Grundkörpersegments 3 in der Haltelängsnut 8 angeordnet und sind dort form- und/oder reibschlüssig aufgenommen. Das Grundkörpersegment 3 besitzt in der gezeigten Darstellung - bis auf die Längsnuten 4 - eine im Wesentlichen zylindrische Form und ist als Vollteil ohne Hohlräume ausgebildet.

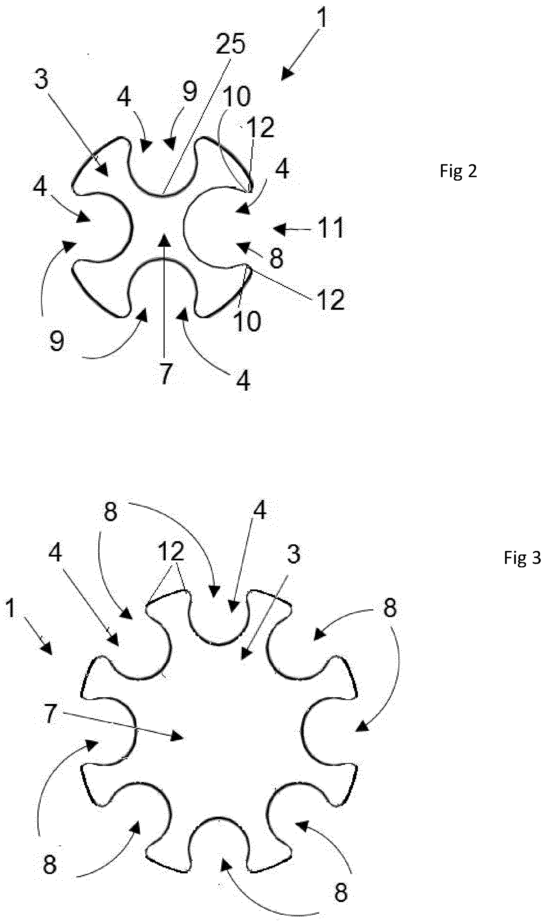

Fig. 2 zeigt eine Ansicht auf das obere Ende 7 des Grundkörpersegments 3 gemäß der in Fig. 1 gezeigten Ausführungsform. Es ist erkennbar, dass sowohl die Haltelängsnut 8, als auch die weiteren Haltelängsnuten 9 im Querschnitt betrachtet einen zumindest teilweise runden Rand 25 besitzen. Weiters ist erkennbar, dass die Längsnuten 4 (also die Haltelängsnut 8 und die weiteren Haltelängsnuten 9) regelmäßig voneinander beabstandet entlang des Außenumfangs des Grundkörpersegments 3 angeordnet sind. In der gezeigten Ausführungsform besitzt die Haltelängsnut 8 einen größeren Querschnitt als die weiteren Haltelängsnuten 9. Der Querschnitt der Haltelängsnut 8 kann an einen Querschnitt eines Temperaturfühlers 2 angepasst sein. Alternativ kann jedoch auch vorgesehen sein, dass der Querschnitt der Haltelängsnut 8 und die Querschnitte der weiteren Haltelängsnuten 9 im Wesentlichen ident sind bzw. dass mehrere Haltelängsnuten 8 an dem Grundkörpersegment 3 vorgesehen sind. In diesem Fall kann in jede der Längsnuten 4 ein Temperaturfühler 2 eingefügt werden. In der gezeigten Darstellung sind die Querschnitte der weiteren Haltelängsnuten 9 jedoch kleiner als der Querschnitt der Haltelängsnut 8, sodass Temperaturfühler 2 nicht in die weiteren Haltelängsnuten 9 eingefügt werden können (sondern lediglich in die Haltelängsnut 8). Um einen Temperaturfühler 2 zu fixieren, bildet die Haltelängsnut 8 jeweils an den die Öffnung 11 begrenzenden Längsrändern 10 eine Klemmnase 12 aus. Die Klemmnasen 12 verhindern ein unbeabsichtigtes Lösen eines eingefügten Temperaturfühlers 2 aus der Haltelängsnut 8. Durch die Klemmnasen 12 wird der Temperaturfühler 2 formschlüssig und/oder reibschlüssig in der Haltelängsnut 8 gehalten. Der Reibschluss bzw. Formschluss sorgt dafür, dass der Temperaturfühler 2 an der vorgesehenen Stelle gehalten wird und nicht unbeabsichtigt aus der Haltelängsnut 8 herausfallen bzw. in axialer Richtung verrutschen kann. Auch die weiteren Haltelängsnuten 9 können Klemmnasen ausbilden. Der Temperaturfühler 2 kann in die Haltelängsnut 8 eingeklippst werden. Dabei werden die Klemmnasen 12 vorübergehend nach außen gedrückt. Grundsätzlich kann der Temperaturfühler 2 an einer beliebigen Stelle entlang der Haltelängsnut 8 eingeklippst werden.

Fig 3. zeigt eine alternative Ausführungsform des Grundkörpersegments 3 mit insgesamt acht Längsnuten 4. Die Längsnuten 4 besitzen allesamt den gleichen Querschnitt und sind als Haltelängsnuten 8 ausgeführt, sodass in jede der Längsnuten 4 ein Temperaturfühler 2 eingefügt werden kann. Es kann jedoch selbstverständlich auch vorgesehen sein, dass eine oder mehrere der Längsnuten 4 als Haltelängsnut 8 und die übrigen Längsnuten 4 als weitere Haltelängsnuten 9 mit einem kleineren Querschnitt ausgebildet sind.

Fig. 4 zeigt eine Haltevorrichtung 1 mit zwei gleichartigen aneinandergefügten Grundkörpersegmenten 3 und 3'. Es könnten auch noch weitere Grundkörpersegmente angefügt sein. Jedes der Grundkörpersegmente 3, 3' besitzt jeweils eine Haltelängsnut 8, 8' und drei weitere Haltelängsnuten 9, 9' mit einem gegenüber der Haltelängsnut 8, 8' verringerten Querschnitt. Die Grundkörpersegmente 3, 3' sind derart aneinandergefügt, dass die Längsnuten 4, 4' fluchtend ineinander übergehen. Insbesondere sind die Grundkörpersegmente 3, 3' dabei derart orientiert, dass die Haltelängsnut 8 des Grundkörpersegments 3 fluchtend zu einer weiteren Haltelängsnut 9' des Grundkörpersegments 3' angeordnet ist. Die weiteren Haltelängsnuten 9, 9' besitzen in der gezeigten Darstellung einen gegenüber der Haltelängsnut 8, 8' kleineren Querschnitt. Durch die fluchtende Anordnung der Längsnuten 4, 4' kann das Kabel 13 des Temperaturfühlers 2 in der Haltevorrichtung 1 geführt werden. In Fig. 4 ist erkennbar, dass in jede Haltelängsnut 8, 8' eines Grundkörpersegments 3, 3' ein Temperaturfühler 2, 2' eingefügt ist. Das Kabel 13 des Temperaturfühlers 2 verläuft beispielsweise zunächst in der Haltelängsnut 8 des Grundkörpersegments 3 und wird dann in einer der weiteren Haltelängsnuten 9' des Grundkörpersegments 3' geführt. Das Kabel 13' des Temperaturfühlers 2' wird ebenfalls zunächst in der Haltelängsnut 8' des Grundkörpersegments 3' geführt. Wäre an das Grundkörpersegment 3' noch ein weiteres Grundkörpersegment 3'' angefügt, so könnten die Kabel 13, 13' jeweils in einer weiteren Haltelängsnut 9'' dieses Grundkörpersegments 3'' weitergeführt werden. Das Prinzip ist beliebig erweiterbar. Zweckmäßig ist dabei, wenn die Anzahl an Längsnuten 4 zumindest der Anzahl an Temperaturfühlern 2 der Haltevorrichtung 1 entspricht. In der Ausführungsform gemäß Fig. 4 wird zwischen Haltelängsnuten 8 und weiteren Haltelängsnuten 9 unterschieden. In einer alternativen Ausführungsform kann auch vorgesehen sein, dass sämtliche Längsnuten 4 jedes Grundkörpersegments 3, 3', 3'' etc. als gleichartige Haltelängsnuten 8 ausgebildet sind, d.h. keine weiteren Haltelängsnuten 9 vorgesehen sind.

Fig. 5A zeigt mit Blick auf das obere Ende 7 ein Grundkörpersegment 3 mit einer Haltelängsnut 8 sowie drei weiteren Haltelängsnuten 9, wobei in die Haltelängsnut 8 ein Temperaturfühler 2 eingefügt ist. Die weiteren Haltelängsnuten 9 des Grundkörpersegmentes 3 sind innerhalb des Verlaufes des Grundkörpersegmentes 3 unbelegt und ermöglichen daher teilweise die Sicht auf Temperaturfühlerköpfe 27', 27'' und 27‴, die in Haltelängsnuten 8', 8" und 8‴ von an das Grundkörpersegment 3 in Längsrichtung angefügten Grundkörpersegmente 3', 3'' und 3‴ eingefügt sind. Erkennbar ist, dass die Temperaturfühlerköpfe 27', 27" und 27‴ teilweise durch die weiteren Haltelängsnuten 9 des Grundkörpersegmentes 3 verdeckt sind. Die Lagen der Temperaturfühlerköpfe 27', 27'' und 27‴ sind durch gestrichelte Linien angedeutet. Die Fühlerkabel 13, 13', 13'' und 13‴ sind in dieser Ansicht nicht sichtbar, verlaufen aber wie nach dem in Fig. 4 gezeigten Prinzip. In der Darstellung ist erkennbar, dass der Temperaturfühler 2, genauer der Temperaturfühlerkopf 27, aus der Öffnung 11 der Haltelängsnut 8 ragt und in einen reibschlüssigen Kontakt mit einer Innenwandung 14 eines Tauchrohrs 15 tritt. Gleiches gilt auch für die Temperaturfühler 2', 2'' und **2‴.** Durch den Kontakt wird die Temperatur einer umgebenden Flüssigkeit direkt an den Temperaturfühler 2 weitergegeben. Das Grundkörpersegment hingegen steht in keinem Kontakt mit der Innenwand 14 des Tauchrohres 15. Dies ist in der Detailansicht Fig. 5B ersichtlich.

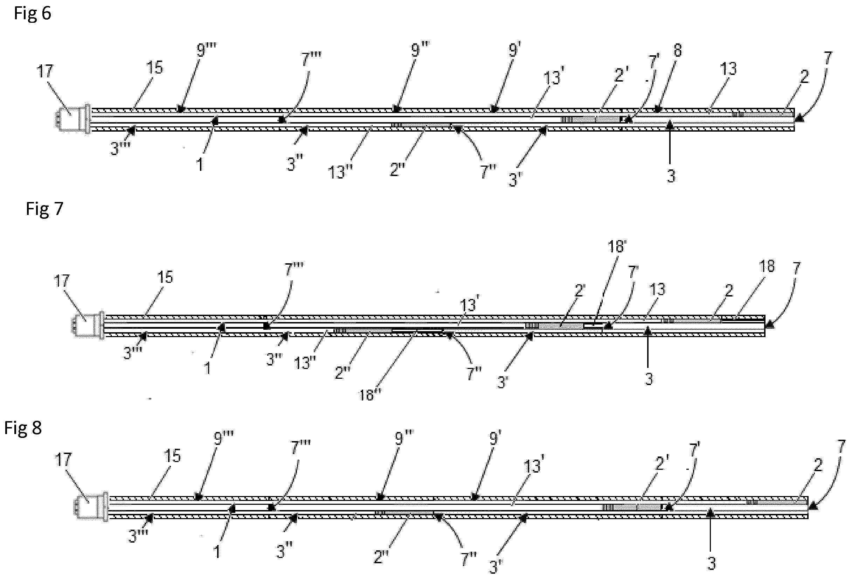

Fig. 6 zeigt eine schematische Darstellung eines im Halbschnitt dargestellten Tauchrohres 15 mit mehreren darin angeordneten Grundkörpersegmenten 3, 3', 3", 3‴. Am unteren Ende des Tauchrohres 15 ist ein Anschlussflansch 17 vorgesehen. Die Grundkörpersegmente 3, 3', 3", 3‴ sind gemäß dem Schema von Fig. 4 in das Tauchrohr 15 eingefügt. In jedem Grundkörpersegment 3, 3', 3'', 3‴ ist jeweils ein Temperaturfühler 2, 2', 2'', 2‴ aufgenommen. Es ist dabei erkennbar, dass das Kabel 13 des Temperaturfühlers 2 des am gegenüberliegenden Ende des Anschlussflansches 17 angeordneten Grundkörpersegments 3 zunächst in der Haltelängsnut 8 des Grundkörpersegments 3 verläuft und anschließend in den weiteren Haltelängsnuten 9', 9", 9‴ der übrigen Grundkörpersegmente 3', 3", 3‴ bis zum Anschlussflansch 17 geführt wird. Auf ähnliche Weise werden die Kabel 13' und 13" der Temperaturfühler 2' und 2" bis zum Anschlussflansch 17 geführt. Das Kabel 13‴ des Temperaturfühlers 2‴ im Grundkörpersegment 3‴ wird nur in der Haltelängsnut 8‴ bis zum Anschlussflansch 17 geführt. Die Temperaturfühler 2, 2', 2'', 2‴ bzw. deren Fühlerköpfe schließen dabei bündig mit dem oberen, dem Anschlussflansch 17 gegenüberliegenden Ende 7, 7', 7'', 7‴ des jeweiligen Grundkörpersegments 3, 3', 3", 3‴ ab.

Fig. 7 zeigt ebenfalls eine schematische Darstellung eines im Halbschnitt dargestellten Tauchrohres 15 mit mehreren darin angeordneten Grundkörpersegmenten 3, 3', 3", 3‴. Im Unterschied zur Ausführungsform gemäß Fig. 6 werden bei dieser Ausführungsform Positionierelemente 18 zur Positionierung der Temperaturfühler 2 verwendet. Die Positionierelemente 18, 18', 18", 18‴ schließen dabei bündig mit dem oberem, dem Anschlussflansch 17 gegenüberliegenden Ende 7, 7', 7'', 7‴, des jeweiligen Grundkörpersegments 3, 3', 3", 3‴ ab.

Fig. 8 zeigt ebenfalls eine schematische Darstellung eines im Halbschnitt dargestellten Tauchrohres 15 mit mehreren darin angeordneten Grundkörpersegmenten 3, 3', 3", 3‴. Im Unterschied zu den beiden obigen Ausführungsformen werden hierbei Grundkörpersegmente 3, 3', 3", 3‴ unterschiedlicher Längen eingesetzt. Die Temperaturfühler 2, 2', 2'', 2‴ bzw. deren Fühlerköpfe schließen dabei wieder bündig mit dem oberem, dem Anschlussflansch 17 gegenüberliegenden Ende 7, 7', 7", 7‴ des jeweiligen Grundkörpersegments 3, 3', 3'', 3‴ ab. Auf Grund der unterschiedlichen Längen der Grundkörpersegmente befinden sich die Temperaturfühler 2, 2', 2'', 2‴ bzw. deren Fühlerköpfe im Vergleich zur Ausführungsform von Fig. 6 an einer anderen Position.

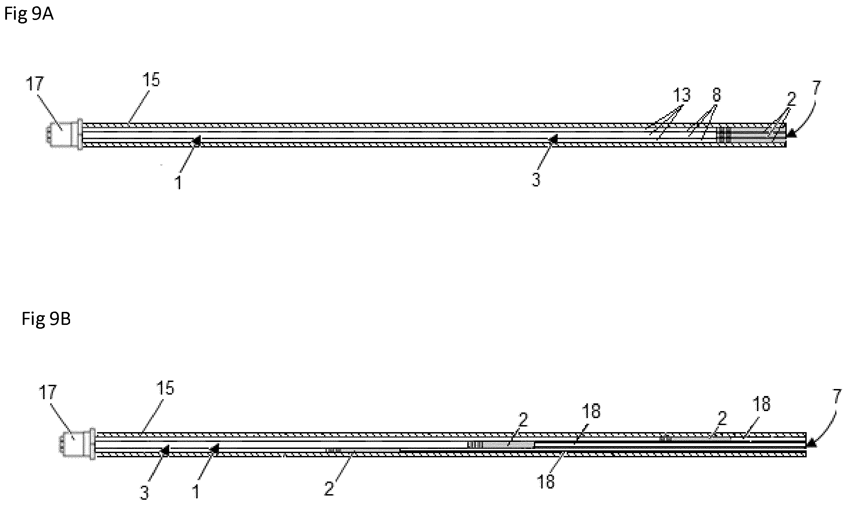

Fig. 9A zeigt ebenfalls eine schematische Darstellung eines im Halbschnitt dargestellten) Tauchrohres 15 mit einem darin angeordneten Grundkörpersegment 3. Das Grundkörpersegment 3 besitzt mehrere gleichartige, parallel verlaufende Haltelängsnuten 8, welche regelmäßig beabstandet voneinander entlang des Außenumfanges des Grundkörpersegments 3 angeordnet sind. In der gezeigten Darstellung ist in jeder der Haltelängsnuten 8 ein Temperaturfühler 2 eingefügt. Die Temperaturfühlerköpfe der Temperaturfühler 2 schließen bündig mit der Stirnseite am oberen Ende 7 des Grundkörpersegments 3 ab. Die Kabel 13 der Temperaturfühler 2 verlaufen in der jeweiligen Haltelängsnut 8 bis zum Anschlussflansch 17.

Fig. 9B zeigt ebenfalls eine schematische Darstellung eines im Halbschnitt dargestellten Tauchrohres 15 mit einem darin angeordneten Grundkörpersegment 3. Das Grundkörpersegment 3 besitzt, wie in Fig. 9 ausgeführt, mehrere gleichartige, parallel verlaufende Haltelängsnuten 8, welche regelmäßig beabstandet voneinander entlang des Außenumfanges des Grundkörpersegments 3 angeordnet sind. In der gezeigten Darstellung ist in jeder der Haltelängsnuten 8 ein Temperaturfühler 2 eingefügt. Im Unterschied zu Fig. 9A werden die Temperaturfühler 2 in unterschiedlichen Höhen mittels Positionierelementen 18 platziert, die ihrerseits jeweils bündig mit dem oberen, dem Anschlussflansch 17 gegenüberliegenden Ende 7 des Grundkörpersegments 3 abschließen. Die Positionierelemente 18 können unterschiedliche Längen aufweisen. Die Kabel 13 der Temperaturfühler 2 verlaufen in der Haltelängsnut 8.

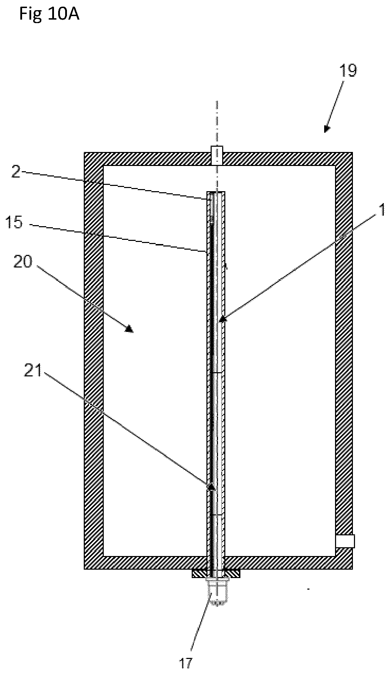

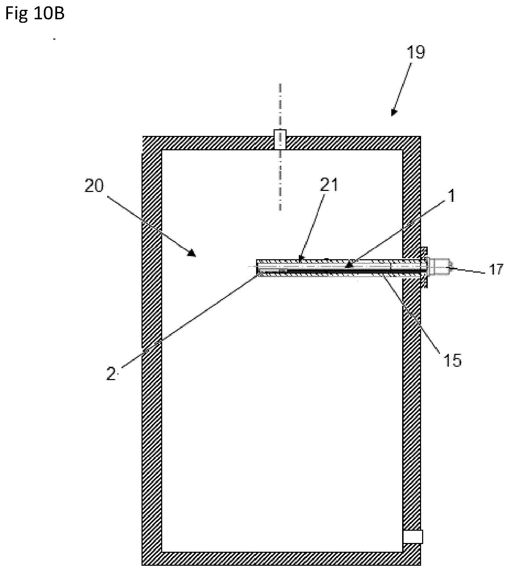

Fig. 10A zeigt einen Warmwasserspeicher 19, in dessen Aufnahmeraum 20 eine Temperaturmesseinrichtung 21 in Form eines Tauchrohres 15 mit zumindest einer Haltevorrichtung 1 und zumindest einen Temperaturfühler 2 vertikal angeordnet ist. Wenn sich eine Flüssigkeit in dem Aufnahmeraum 20 befindet, kann mithilfe des Temperaturfühlers 2 die Temperatur der Flüssigkeit bestimmt werden. Wenn in dem Tauchrohr 15 mehrere Temperaturfühler 2 angeordnet sind, kann die Temperatur der Flüssigkeit in unterschiedlichen Höhen bestimmt werden. Alternativ kann auch vorgesehen sein, dass das Tauchrohr 15 horizontal in dem Aufnahmeraum 19 angeordnet ist (vgl. Fig. 10B).

## Patentansprüche

1. Vorrichtung mit einem Aufnahmeraum (20) für eine Flüssigkeit und einer in dem Aufnahmeraum (20) befindlichen Temperaturmesseinrichtung (21), welche ein Tauchrohr (15) mit mehreren Temperaturfühlern (2) aufweist, wobei in das Innere des Tauchrohrs (15) eine Haltevorrichtung (1) für die Temperaturfühler (2) eingefügt ist, welche Haltevorrichtung (2) zumindest ein längliches Grundkörpersegment (3) mit zumindest einer Haltelängsnut (8) aufweist, wobei die Temperaturfühler (2) in die zumindest eine Haltelängsnut des zumindest einen Grundkörpersegments (3) aufgenommen sind, wobei jeweils ein Temperaturfühlerkopf der Temperaturfühler (2) zumindest teilweise aus der Haltelängsnut (8) des Grundkörpersegments (3) hervorragt, **dadurch gekennzeichnet, dass** die Temperaturmesseinrichtung (21) dazu eingerichtet ist, die Temperatur der Flüssigkeit in verschiedenen Höhen im Aufnahmeraum (20) zu bestimmen, wobei das Tauchrohr (15) zur Messung der Temperatur der Flüssigkeit in verschiedenen Höhen vertikal in dem Aufnahmeraum (20) angeordnet ist, oder dass das Tauchrohr (15) horizontal in dem Aufnahmeraum (20) angeordnet ist, um Temperaturen der Flüssigkeit an verschiedenen Stellen einer Ebene zu bestimmen.

2. Vorrichtung nach Anspruch 1, **dadurch gekennzeichnet, dass** sich die Haltelängsnut (8) von einem unteren Ende (6) des Grundkörpersegments (3) bis zu einem oberen Ende (7) des Grundkörpersegments (3) erstreckt und/oder wobei eine Öffnung (11) der Haltelängsnut (8) an einer Außenseite des Grundkörpersegments (3) angeordnet ist.

3. Vorrichtung nach Anspruch 1 oder 2, **dadurch gekennzeichnet, dass** das Grundkörpersegment (3) zumindest eine, insbesondere zumindest zwei oder drei, im Wesentlichen parallel zur Haltelängsnut (8) verlaufende weitere Haltelängsnut/en (9) aufweist, wobei die weitere/n Haltelängsnut/en (9) vorzugsweise eine von der Querschnittsform der Haltelängsnut (8) verschiedene Querschnittsform und/oder einen vom Durchmesser der Haltelängsnut (8) verschiedenen Durchmesser aufweist/en.

4. Vorrichtung nach Anspruch 3, **dadurch gekennzeichnet, dass** die Haltevorrichtung (2) zumindest zwei vorzugsweise gleichartige Grundkörpersegmente (3) aufweist, die derart entlang einer gedachten Geraden zueinander angeordnet, vorzugsweise mittelbar oder unmittelbar aneinandergefügt, sind, dass die Längsnuten (4,8,9) insbesondere fluchtend ineinander übergehen.

5. Vorrichtung nach einem der Ansprüche 1 bis 4, **dadurch gekennzeichnet, dass** die Haltelängsnut (8) zumindest eine Klemmnase (12) zur formschlüssigen und/oder reibschlüssigen Aufnahme eines der Temperaturfühler (2) in die Haltelängsnut (8) aufweist.

6. Vorrichtung nach einem der Ansprüche 1 bis 5, **dadurch gekennzeichnet, dass** in der Haltelängsnut (8) zur Positionierung eines der Temperaturfühler (2) ein Positionierelement (18) vorgesehen ist.

7. Vorrichtung nach einem der Ansprüche 1 bis 6, **dadurch gekennzeichnet, dass** die Querschnittsform der Haltelängsnut (8) zumindest teilweise der Querschnittsform eines der Temperaturfühler (2) entspricht, wobei ein Durchmesser der Haltelängsnut (8) vorzugsweise im Wesentlichen einem Durchmesser eines der Temperaturfühler (2) entspricht.

8. Vorrichtung nach einem der Ansprüche 1 bis 7, **dadurch gekennzeichnet, dass** zumindest zwei Grundkörpersegmente (3, 3') vorgesehen sind, wobei die Grundkörpersegmente (3,3') in die Längsrichtung des Tauchrohres (15) betrachtet hintereinander eingefügt sind, wobei in die Haltelängsnuten (8,8') der Grundkörpersegmente (3,3') jeweils ein Temperaturfühler (2,2') aufgenommen ist.

9. Vorrichtung nach Anspruch 8, **dadurch gekennzeichnet, dass** die Grundkörpersegmente (3,3') jeweils zumindest eine weitere Haltelängsnut (9,9') aufweisen, wobei die Grundkörpersegmente (3, 3') derart zueinander angeordnet sind, dass eine Haltelängsnut (8) eines Grundkörpersegments (3) an eine weitere Haltelängsnut (9') mit einem vorzugsweise gegenüber der Haltelängsnut (8') verringerten Querschnitt eines anderen Grundkörpersegments (3') insbesondere fluchtend anschließt.

10. Vorrichtung nach Anspruch 8, **dadurch gekennzeichnet, dass** ein Kabel (13) des Temperaturfühlers (2) eines Grundkörpersegments (3) in der Haltelängsnut (8) des entsprechenden Grundkörpersegments (3) und in der weiteren Haltelängsnut (9') eines anderen Grundkörpersegments (3') verläuft.

11. Vorrichtung nach einem der Ansprüche 8 bis 10, **dadurch gekennzeichnet, dass** die Anzahl an Längsnuten (4,8,9) eines, insbesondere jeden, Grundkörpersegments (1) der Anzahl an Temperaturfühlern (2) in dem Tauchrohr (15) entspricht.

12. Vorrichtung nach einem der Ansprüche 7 bis 11, **dadurch gekennzeichnet, dass** die Haltevorrichtung (1) durch Reibschluss mit einer Innenwandung des Tauchrohrs (11) gehalten wird.

13. Vorrichtung nach einem der Ansprüche 1 bis 12, **dadurch gekennzeichnet, dass** das Tauchrohr (15) im Wesentlichen senkrecht angeordnet ist.

14. Vorrichtung nach einem der Ansprüche 1 bis 13, **dadurch gekennzeichnet, dass** die Vorrichtung ein Warmwasserspeicher (19) ist.

## Claims

1. Device comprising a receiving space (20) for a liquid and a temperature measuring device (21) located in the receiving space (20), which temperature measuring device (21) comprises an immersion tube (15) having a plurality of temperature sensors (2), wherein a holding device (1) for the temperature sensors (2) is inserted into the interior of the immersion tube (15), which holding device (2) comprises at least one elongated base body segment (3) having at least one longitudinal holding groove (8), wherein the temperature sensors (2) are received in the at least one longitudinal holding groove of the at least one base body segment (3), wherein in each case one temperature sensor head of the temperature sensors (2) at least partially protrudes from the longitudinal holding groove (8) of the base body segment (3), **characterized in that** the temperature measuring device (21) is configured to determine the temperature of the liquid at different heights in the receiving space (20), wherein the immersion tube (15) is arranged vertically in the receiving space (20) for measuring the temperature of the liquid at different heights, or **in that** the immersion tube (15) is arranged horizontally in the receiving space (20) in order to determine temperatures of the liquid at different locations of a plane.

2. Device according to claim 1, **characterized in that** the longitudinal holding groove (8) extends from a lower end (6) of the base body segment (3) to an upper end (7) of the base body segment (3) and/or wherein an opening (11) of the longitudinal holding groove (8) is arranged on an outer side of the base body segment (3).

3. Device according to claim 1 or 2, **characterized in that** the base body segment (3) comprises at least one, in particular at least two or three, further longitudinal holding groove(s) (9) extending substantially parallel to the longitudinal holding groove (8), wherein the further longitudinal holding groove(s) (9) preferably has/have a cross-sectional shape different from the cross-sectional shape of the longitudinal holding groove (8) and/or a diameter different from the diameter of the longitudinal holding groove (8).

4. Device according to claim 3, **characterized in that** the holding device (2) comprises at least two preferably identical base body segments (3) which are arranged relative to one another along an imaginary straight line, preferably directly or indirectly joined to one another, in such a way that the longitudinal grooves (4, 8, 9) merge into one another, in particular in an aligned manner.

5. Device according to any one of claims 1 to 4, **characterized in that** the longitudinal holding groove (8) comprises at least one clamping lug (12) for form-fitting and/or frictional receiving of one of the temperature sensors (2) in the longitudinal holding groove (8).

6. Device according to any one of claims 1 to 5, **characterized in that** a positioning element (18) is provided in the longitudinal holding groove (8) for positioning one of the temperature sensors (2).

7. Device according to any one of claims 1 to 6, **characterized in that** the cross-sectional shape of the longitudinal holding groove (8) at least partially corresponds to the cross-sectional shape of one of the temperature sensors (2), wherein a diameter of the longitudinal holding groove (8) preferably substantially corresponds to a diameter of one of the temperature sensors (2).

8. Device according to any one of claims 1 to 7, **characterized in that** at least two base body segments (3, 3') are provided, wherein the base body segments (3, 3') are inserted one behind the other as viewed in the longitudinal direction of the immersion tube (15), wherein in each case one temperature sensor (2, 2') is received in the longitudinal holding grooves (8, 8') of the base body segments (3, 3').

9. Device according to claim 8, **characterized in that** the base body segments (3, 3') each comprise at least one further longitudinal holding groove (9, 9'), wherein the base body segments (3, 3') are arranged relative to one another in such a way that a longitudinal holding groove (8) of one base body segment (3) adjoins, in particular in an aligned manner, a further longitudinal holding groove (9') of another base body segment (3') having a cross section preferably reduced compared to the longitudinal holding groove (8').

10. Device according to claim 8, **characterized in that** a cable (13) of the temperature sensor (2) of one base body segment (3) runs in the longitudinal holding groove (8) of the corresponding base body segment (3) and in the further longitudinal holding groove (9') of another base body segment (3').

11. Device according to any one of claims 8 to 10, **characterized in that** the number of longitudinal grooves (4, 8, 9) of one, in particular each, base body segment (1) corresponds to the number of temperature sensors (2) in the immersion tube (15).

12. Device according to any one of claims 7 to 11, **characterized in that** the holding device (1) is held by frictional engagement with an inner wall of the immersion tube (11).

13. Device according to any one of claims 1 to 12, **characterized in that** the immersion tube (15) is arranged substantially vertically.

14. Device according to any one of claims 1 to 13, **characterized in that** the device is a hot water storage tank (19).

## Revendications

1. Dispositif comprenant un espace de réception (20) pour un liquide et un dispositif de mesure de température (21) situé dans l'espace de réception (20), lequel dispositif de mesure de température (21) comporte un tube plongeur (15) pourvu d'une pluralité de capteurs de température (2), dans lequel un dispositif de maintien (1) pour les capteurs de température (2) est inséré à l'intérieur du tube plongeur (15), lequel dispositif de maintien (2) comporte au moins un segment de corps de base allongé (3) doté d'au moins une rainure longitudinale de maintien (8), les capteurs de température (2) étant reçus dans l'au moins une rainure longitudinale de maintien de l'au moins un segment de corps de base (3), dans lequel, à chaque fois, une tête de capteur de température des capteurs de température (2) fait saillie au moins partiellement hors de la rainure longitudinale de maintien (8) du segment de corps de base (3), **caractérisé en ce que** le dispositif de mesure de température (21) est conçu pour déterminer la température du liquide à différentes hauteurs dans l'espace de réception (20), le tube plongeur (15) étant disposé verticalement dans l'espace de réception (20) pour mesurer la température du liquide à différentes hauteurs, ou **en ce que** le tube plongeur (15) est disposé horizontalement dans l'espace de réception (20) afin de déterminer des températures du liquide en différents points d'un plan.

2. Dispositif selon la revendication 1, **caractérisé en ce que** la rainure longitudinale de maintien (8) s'étend d'une extrémité inférieure (6) du segment de corps de base (3) jusqu'à une extrémité supérieure (7) du segment de corps de base (3) et/ou dans lequel une ouverture (11) de la rainure longitudinale de maintien (8) est disposée sur un côté extérieur du segment de corps de base (3).

3. Dispositif selon la revendication 1 ou 2, **caractérisé en ce que** le segment de corps de base (3) comporte au moins une, en particulier au moins deux ou trois, autre(s) rainure(s) longitudinale(s) de maintien (9) s'étendant sensiblement parallèlement à la rainure longitudinale de maintien (8), la ou les autre(s) rainure(s) longitudinale(s) de maintien (9) présentant de préférence une forme de section transversale différente de la forme de section transversale de la rainure longitudinale de maintien (8) et/ou un diamètre différent du diamètre de la rainure longitudinale de maintien (8).

4. Dispositif selon la revendication 3, **caractérisé en ce que** le dispositif de maintien (2) comporte au moins deux segments de corps de base (3) de préférence de même type, qui sont disposés les uns par rapport aux autres le long d'une ligne droite imaginaire, de préférence assemblés directement ou indirectement les uns aux autres, de telle sorte que les rainures longitudinales (4, 8, 9) se prolongent les unes dans les autres, en particulier de manière alignée.

5. Dispositif selon l'une quelconque des revendications 1 à 4, **caractérisé en ce que** la rainure longitudinale de maintien (8) comporte au moins un ergot de serrage (12) pour la réception par complémentarité de forme et/oder par friction de l'un des capteurs de température (2) dans la rainure longitudinale de maintien (8).

6. Dispositif selon l'une quelconque des revendications 1 à 5, **caractérisé en ce qu'**un élément de positionnement (18) est prévu dans la rainure longitudinale de maintien (8) pour le positionnement de l'un des capteurs de température (2).

7. Dispositif selon l'une quelconque des revendications 1 à 6, **caractérisé en ce que** la forme de section transversale de la rainure longitudinale de maintien (8) correspond au moins partiellement à la forme de section transversale de l'un des capteurs de température (2), un diamètre de la rainure longitudinale de maintien (8) correspondant de préférence sensiblement à un diamètre de l'un des capteurs de température (2).

8. Dispositif selon l'une quelconque des revendications 1 à 7, **caractérisé en ce qu'**au moins deux segments de corps de base (3, 3') sont prévus, les segments de corps de base (3, 3') étant insérés les uns derrière les autres, vus dans la direction longitudinale du tube plongeur (15), dans lequel, dans les rainures longitudinales de maintien (8, 8') des segments de corps de base (3, 3'), est reçu à chaque fois un capteur de température (2, 2').

9. Dispositif selon la revendication 8, **caractérisé en ce que** les segments de corps de base (3, 3') comportent chacun au moins une autre rainure longitudinale de maintien (9, 9'), les segments de corps de base (3, 3') étant disposés les uns par rapport aux autres de telle sorte qu'une rainure longitudinale de maintien (8) d'un segment de corps de base (3) se raccorde, en particulier de manière alignée, à une autre rainure longitudinale de maintien (9') d'un autre segment de corps de base (3') ayant une section transversale de préférence réduite par rapport à la rainure longitudinale de maintien (8').

10. Dispositif selon la revendication 8, **caractérisé en ce qu'**un câble (13) du capteur de température (2) d'un segment de corps de base (3) s'étend dans la rainure longitudinale de maintien (8) du segment de corps de base (3) correspondant et dans l'autre rainure longitudinale de maintien (9') d'un autre segment de corps de base (3').

11. Dispositif selon l'une quelconque des revendications 8 à 10, **caractérisé en ce que** le nombre de rainures longitudinales (4, 8, 9) d'un, en particulier de chaque, segment de corps de base (1) correspond au nombre de capteurs de température (2) dans le tube plongeur (15).

12. Dispositif selon l'une quelconque des revendications 7 à 11, **caractérisé en ce que** le dispositif de maintien (1) est maintenu par engagement par friction avec une paroi intérieure du tube plongeur (11).

13. Dispositif selon l'une quelconque des revendications 1 à 12, **caractérisé en ce que** le tube plongeur (15) est disposé sensiblement verticalement.

14. Dispositif selon l'une quelconque des revendications 1 à 13, **caractérisé en ce que** le dispositif est un réservoir d'eau chaude (19).
